# EUROPÄISCHE PATENTSCHRIFT

(11) **EP 0 712 756 B1**
(45) Veröffentlichungstag und Bekanntmachung des Hinweises auf die Patenterteilung: **13.01.1999**
(21) Anmeldenummer: 95118026.4
(22) Anmeldetag: 16.11.1995
(51) Int. Cl.: B60P 1/64

(54) **Vorrichtung zur Handhabung von Wechselbehältern**
Device for the handling of containers
Dispositif de manutention de conteneurs

(30) Priorität: 18.11.1994 DE 9418472 U
(43) Veröffentlichungstag der Anmeldung: 22.05.1996
(73) Patentinhaber: Hüffermann Fahrzeugtechnik GmbH, 27793 Wildeshausen (DE)
(72) Erfinder: Hüffermann, Rolf, 27793 Wildeshausen (DE)
(74) Vertreter: Hansmann, Dierk, Dipl.-Ing.

(56) Entgegenhaltungen:
- EP-A- 0 094 280
- DE-A- 2 545 934
- DE-A- 2 823 948
- US-A- 3 819 075

## Beschreibung

Die Erfindung bezieht sich auf eine Vorrichtung zur Handhabung von Wechselbehältern auf Fahrzeugen mit einem Kipprahmen, der über einen Hilfsrahmen am Fahrzeug angeordnet ist und wobei der Kipprahmen gegenüber dem Hilfsrahmen durch Hydraulikzylinder als Kippzylinder schwenkbar angeordnet ist, wobei der Kipprahmen einen über einen Schlitten geführten Haken zur Aufnahme und Verschiebung eines Wechselbehälters aufweist und mittels Stellmittel über die Länge des Kipprahmens einstellbar ist

Eine derartige Anordnung ist aus der DE-A-25 45 934 bekannt. Hierbei ist aber vorgesehen, daß der Kipprahmen über eine ortsfeste Achse verschwenkbar ist, so daß generell eine eingeschränkte Verstellung und Einstellbarkeit des Kipprahmens auftritt.

Bei derartigen Ausbildungen besteht das Problem, für einen Einsatz von Müllsammelbehältern als Wechselbehälter diese einer Preßvorrichtung zuzuordnen, wobei die Preßvorrichtung zwischen Behälter und Fahrerhaus angeordnet ist und der Abfall in axialer Richtung durch eine Öffnung in den Behälter preßbar ist. Hierzu ist es erforderlich, den Wechselbehälter dem Pressenausgang zuzuordnen und den Kipprahmen in seiner Funktion nicht zu beeinträchtigen.

Die Aufgabe der Erfindung ist es, eine gattungsgemäße Vorrichtung zu schaffen, die eine vielseitige Handhabung für Wechselbehälter unter Berücksichtigung der auftretenden Einsatzbereiche über einen Kipprahmen gewährleistet und auch mit dem Kippzylinder eine Verschiebung des Kipprahmens ermöglicht.

Die Lösung dieser Aufgabe erfolgt erfindungsgemäß dadurch, daß der Kipprahmen im Endbereich des Hilfsrahmens über eine Schlittenführung mit einem schwenkbares Führungselement gehalten ist und daß der Kipprahmen in der Transportlage des Wechselbehälters durch die zugeordneten Kippzylinder über die Schlittenführung gegenüber dem Hilfsrahmen horizontal verschiebbar einstellbar ist.

Hierdurch können nicht nur das Aufnehmen, Kippen und Absetzen durch eine Antriebseinheit durchgeführt werden, sondern es ist eine Gesamtverschiebung des Rahmens durchführbar, und somit ist auch eine Zuordnung eines Müllwechselbehälters zu einer vorgeschalteten Presse durchführbar.

Eine einfache Anordnung wird dadurch gebildet, daß das schwenkbare Führungselement zur Schlittenführung durch Gegenlager am Hilfsrahmen und Führungsschienen des Kipprahmens gebildet sind.

Um für unterschiedliche Handhabungen definierte Schwenkachsen des Kipprahmens einzustellen, wird vorgeschlagen, daß der Kipprahmen im Abstand angeordnete Halteelemente als Gegenlager für das Absetzen und Abkippen aufweist, die in korrespondierende Aufnahmeelemente zur Bildung einer Kippachse einschaltbar sind.

Zur einfachen Verstellung des Schlittens am Kipprahmen ist vorgesehen, daß die Stellbewegung des Schlittens für den Haken zur Aufnahme und Verstellung des Wechselbehälters am Kipprahmen über eine durchgehende Antriebsspindel einstellbar ist.

In der Zeichnung ist ein Ausführungsbeispiel der Erfindung schematisch darstellt. Es zeigen:

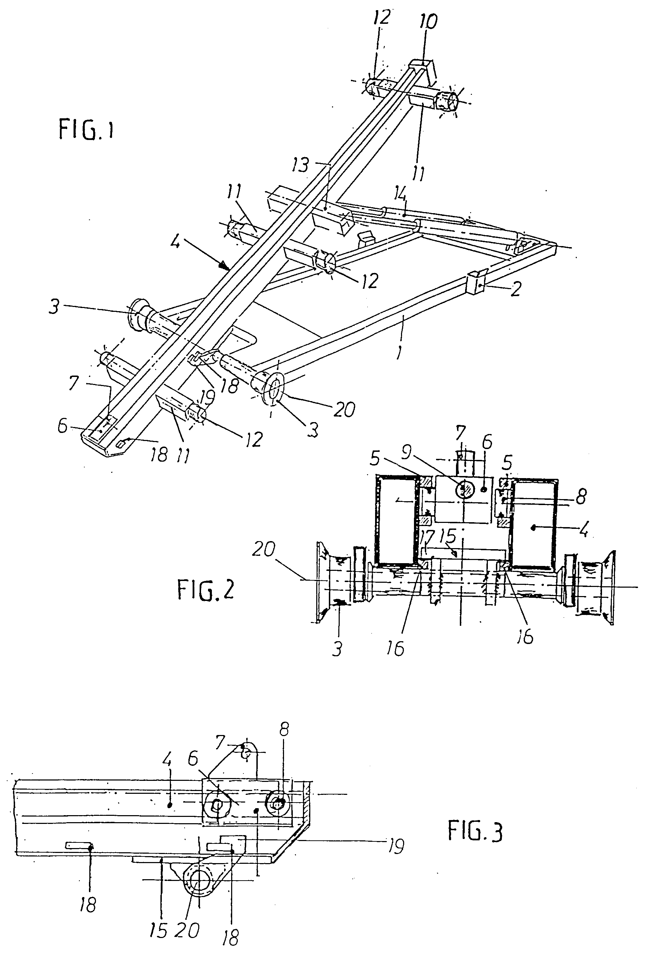

- Fig. 1: eine Prinzipdarstellung einer Gesamtanordnung,
- Fig. 2: einen Schnitt durch einen Kipprahmen im Endbereich des Hilfsrahmens und
- Fig. 3: das Prinzip der Halterung des Kipprahmens im Endbereich des Hilfsrahmens mit dem Schlitten als Hakenaufnahme.

Bei der dargestellten Anordnung ist ein am Fahrzeugchassis angeordneter ortsfester Hilfsrahmen 1 zur Aufnahme eines nicht darstellten Wechselbehälters über entsprechende Aufnahmelager 2 und Laufrollen 3 vorgesehen. Dem Hilfsrahmen 1 ist ein Kipprahmen 4 zugeordnet, der Führungsschienen 5 für einen Schlitten 6 mit einem Aufnahmehaken 7 aufweist und über Rollen 8 abrollt. Zum Antrieb des Schlittens 6 besitzt der Kipprahmen 4 eine in Längsrichtung verlaufende Spindel 9, die über ein Getriebe 10 antreibbar ist und über zugeordnete Mittel am Schlitten 6 eine Verstellung bewirkt.

In diesem Fall besitzt der Kipprahmen 4 Aufnahmebalken 11 mit außenliegenden Rollen 12 zur Aufnahme des Wechselbehälters. Für die Verstellung greifen an einer Traverse 13 des Kipprahmens 4 Kippzylinder 14 an, die mit ihrem anderen Ende am Hilfsrahmen 1 angelenkt sind.

Am Ende des Hilfsrahmens 1 ist ein schwenkbares Führungselement 15 zur Ausbildung einer Schlittenführung des Kipprahmens 4 angeordnet. Hierbei werden Schienenführungen 16 am Kipprahmen 4 über Gegenlager 17 des Führungselementes 15 aufgenommen und ermöglichen unabhängig von der Stellung des Kipprahmens 4 eine geführte Gleitbewegung.

Um eine definierte Schwenkbewegung des Kipprahmens 4 zum Entleeren oder Aufnehmen eines Wechselbehälters zu ermöglichen, besitzt der Kipprahmen 4 im Abstand versetzte Halteelemente 18 als Gegenlager an seinen Außenseiten, die über verschwenkbare Haken 19 als korrespondierende Aufnahmeelemente in den Bereich der Halteelemente 18 verschwenkbar sind und somit mit dem schwenkbaren Führungselement 15 eine definierte Kippachse 20 bilden.

Damit ist es möglich, durch Verstellung des Schlittens 6 mit dem Aufnahmehaken 7 diverse abgestimmte Handhabungen des Wechselbehälters einschließlich der Durchführung eines Aufnahme- oder Absetzvorganges durchzuführen.

In der Transportlage des Kipprahmens 4 ist es außerdem möglich, den gesamten Kipprahmen 4 gegenüber dem Hilfsrahmen 1 über die Kippzylinder 14 zu verschieben, so daß auch eine Zuordnung zu einer Presse mit zugeordneten Öffnungen ermöglicht wird.

## Patentansprüche

1. Vorrichtung zur Handhabung von Wechselbehältern auf Fahrzeugen mit einem Kipprahmen (4), der über einen Hilfsrahmen (1) am Fahrzeug angeordnet ist und der Kipprahmen (4) gegenüber dem Hilfsrahmen (1)durch Hydraulikzylinder als Kippzylinder (14) schwenkbar angeordnet ist, wobei der Kipprahmen (4) einen über einen Schlitten (6) geführten Haken (7) zur Aufnahme und Verschiebung eines Wechselbehälters aufweist und mittels Stellmittel (9) über die Länge des Kipprahmens (4) einstellbar ist, dadurch gekennzeichnet , daR der Kipprahmen (4) im Endbereich des Hilfsrahmens (1) über eine Schlittenführung (15,16,17) mit einem schwenkbares Führungselement (15) gehalten ist und daR der Kipprahmen (4) in der Transportlage des Wechselbehälters durch die zugeordneten Kippzylinder (14) über die Schlittenführung (15,16,17) gegenüber dem Hilfsrahmen (1) horizontal verschiebbar einstellbar ist.

2. Vorrichtung nach Anspruch 1, dadurch gekennzeichnet, daß das schwenkbare Führungselement (15) zur Schlittenführung durch Gegenlager (17) am Hilfsrahmen (1) und Führungsschienen (16) des Kipprahmens (4) gebildet sind.

3. Vorrichtung nach Anspruch 1 oder 2, dadurch gekennzeichnet, daß der Kipprahmen (4) im Abstand angeordnete Halteelemente (18) als Gegenlager für das Absetzen und Abkippen aufweist, die in korrespondierende Aufnahmeelemente (19) zur Bildung einer Kippachse (20) einschaltbar sind.

4. Vorrichtung nach einem der Ansprüche 1 bis 3, dadurch gekennzeichnet, daß die Stellbewegung des Schlittens (6) für den Haken (7) zur Aufnahme und Verstellung des Wechselbehälters am Kipprahmen (4) über eine durchgehende Antriebsspindel (9) einstellbar ist.

## Claims

1. Device for handling interchangeable containers on vehicles having a tipping frame (4), which is disposed via an auxiliary frame (1) on the vehicle and which tipping frame (4) is arranged so as to be capable of swivelling relative to the auxiliary frame (1) by means of hydraulic cylinders as tipping cylinders (14), wherein the tipping frame (4) has a hook (7) guided by means of a slide (6) for receiving and displacing an interchangeable container and is adjustable by positioning means (9) over the length of the tipping frame (4), characterized in that the tipping frame (4) is supported in the end region of the auxiliary frame (1) by means of a slide guide (15, 16, 17) with a swivelling guide element (15) and that the tipping frame (4) in the transport position of the interchangeable container is adjustable by means of the associated tipping cylinders (14) so as to be horizontally displaceable via the slide guide (15, 16, 17) relative to the auxiliary frame (1).

2. Device according to claim 1, characterized in that the swivelling guide element (15) for the slide guide is formed by abutments (17) on the auxiliary frame (1) and guide rails (16) of the tipping frame (4).

3. Device according to claim 1 or 2, characterized in that the tipping frame (4) has retaining elements (18), which are arranged at intervals as abutments for the depositing and tipping operations and are insertable into corresponding receiving elements (19) to form a tipping axle (20).

4. Device according to one of claims 1 to 3, characterized in that the positioning motion of the slide (6) for the hook (7) for receiving and displacing the interchangeable container on the tipping frame (4) is adjustable by means of a continuous drive spindle (9).

## Revendications

1. Dispositif de manutention de containers sur des véhicules qui comporte un châssis basculant (4); lequel a été monté sur le véhicule par l'intermédiaire d'un châssis auxiliaire (1), le châssis basculant (4) ayant été monté de façon à pouvoir pivoter par rapport au châssis auxiliaire (1) à l'intervention de vérins hydrauliques servant de vérins de basculement (14), dispositif dans le cas duquel le châssis basculant (4) est muni d'un crochet (7) guidé par l'intermédiaire d'un chariot (6), crochet (7) destiné à saisir un container et à assurer le déplacement de ce dernier, le chariot (6) pouvant être réglé par un moyen de réglage (9) sur la longueur du châssis basculant (4), le dispositif de manutention de containers étant caractérisé en ce que le châssis basculant (4) est, dans la zone d'extrémité du châssis auxiliaire (1), maintenu par un guidage de chariot (15, 16, 17) comportant un élément de guidage pouvant pivoter (15), et en ce que le châssis basculant (4) dans la position de transport du container, peut être réglé de façon à pouvoir être déplacé dans le sens horizontal par rapport, au châssis auxiliaire (1), grâce aux vérins de basculement y adjoints (14). par l'intermédiaire du guidage de chariot (15, 16, 17).

2. Dispositif suivant la revendication 1 caractérisé en ce que le dispositif de guidage pouvant pivoter (15) pour le guidage du chariot est constitué par un contre-appui (17) prévu sur le châssis auxiliaire (1) et par des rails de guidage (16) du châssis basculant (4).

3. Dispositif suivant l'une ou l'autre des revendications 1 et 2, caractérisé en ce que le châssis basculant (4) est muni d'éléments de retenue montés à distance (18) qui servent de contre-appuis pour la pose et pour le basculement, éléments de retenue (18) qui peuvent être engagés dans des éléments de réception correspondants (19) pour constituer un axe de basculement (20).

4. Dispositif suivant l'une quelconque des revendications 1 à 3, caractérisé en ce que le mouvement de réglage du chariot (6) pour le crochet (7) destiné à saisir le container et à assurer le déplacement de ce dernier sur le châssis basculant (4) peut être réglé par un axe de commande traversant (9).
